# EUROPEAN PATENT APPLICATION

(11) **EP 0 709 654 A1**
(43) Date of publication of application: **01.05.1996**
(21) Application number: 95116032.4
(22) Date of filing: 11.10.1995
(51) Int. Cl.: G01D 5/252

(54) **System, method and cable for detecting the position of mobile objects**

(30) Priority: 13.10.1994 IT MI942084
(71) Applicant: ALCATEL CAVI S.p.A., I-20093 Cologno Monzese (MI) (IT)
(72) Inventor: Russo, Vitaliano, I-20122 Milano (IT); Marsilia, Antonio, I-84100 Salerno (IT)
(74) Representative: Pohl, Herbert, Dipl.-Ing.

(57) **Abstract**

The invention relates to a system, to a method and to a cable for detecting the position of mobile objects, in particular of sliders moving along a linear guideway.

The invention proposes to use a variable geometry radiating cable which performs both the function of position indicator and the function of detected signal transmitter.

The detected signals can be picked up either at the end of cable or at any point of the cable, thus avoiding the need of additional means since it is the cable itself that determines the position of the slider and transmits the signal along itself to the user.

## Description

The invention relates to a system, to a method and to a cable for detecting the position of movable objects, in particular sliders movable along a linear guideway. It is of application mainly in the field of industrial automation but it may have application also in other fields like, e.g., the railway one for controlling the position of the trains.

The position data of a slider moving along a linear guideway are nowadays sensed through probes and sensing systems that are mainly traceable back to two methodologies and combination thereof.

A first methodology is the indirect sensing through a track-pinion system sometime suitably replacing the track-pinion with a suitable metric toothed belt-pulley, where the linear motion is detected and, through incremental or absolute encoders, one traces, by deducing it, the position of the slider on the guide.

A second methodology is the direct sensing through the reading out of optical or reflection lines disposed along the guide.

Another system still belonging to this methodology is the reading out of inductive or capacitive verniers disposed along the guide.

Both the methodologies have drawbacks such as high cost increasing exponentially with the degree of accuracy required and a slider speed limited by the mechanical possibilities of the components used.

In case of indirect sensing there is a further drawback of a poor repeatibility of the positions sensed, due to mechanical clearances of the system. In case of direct sensing, the lines disposed along the guide must be protected against darkening or encrusting agents; moreover, both methodologies allow the detection of the position substantially of only one slider at a time.

Therefore, it is an object of the present invention to overcome the drawbacks of the known art.

In accordance with the invention, this object is achieved by a system, a method and a cable as set forth in claims 1, 7 and 10 respectively.

Further characteristics of the invention are set forth in the dependent claims.

Through the use of a cable that gathers the functions of position indicator and transmitter of the detected signal, the known systems are remarkably simplified, e.g., by eliminating means added to the guides for sending the detected signals to the user.

The detected signals can be picked up both at the cable and or at any point of the cable, additional means to the guide being not necessary since the cable itself determines the slider position and sends back the signal over itself to the user.

Therefore the linear guideway systems can be produced at lower costs still achieving precision comparable with the prior art systems.

Moreover, a more compact system is obtained since the cable may form a single piece with the guide.

The signal received by the user is more suitable for a direct processing of the information since it is already in a digital form.

The system being one which can be made available at lower cost than current costs, at parity of precision and detection accuracy, it allows the extension of the use of linear guideways to fields in which the cost of the current systems makes the access to automation prohibitive.

The invention will now be described in greater detail in conjunction with the attached drawings in which:
- Fig. 1 represents schematically the arrangement of the conductors at one end of a cable in accordance with the present invention;
- Fig. 2 represents, in an enlarged view, the position of a slider at one section of the cable of Fig. 1, in accordance with the invention.

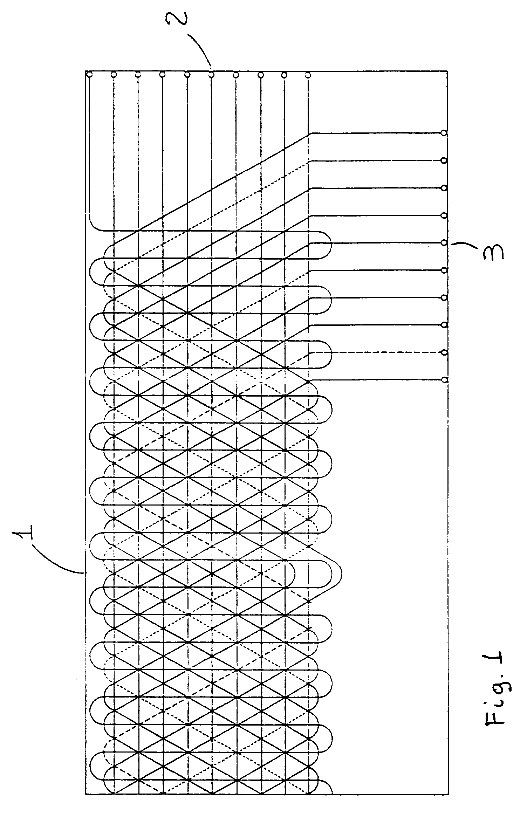

With reference to Fig. 1 representing the arrangement of the conductors at one end of the cable 1, according to an embodiment of the invention, a first group 2 of conductors can be seen disposed in a substantially longitudinal direction with a fixed geometry lay and a second group 3 of conductors disposed according to a variable design waveform along the axis of the cable.

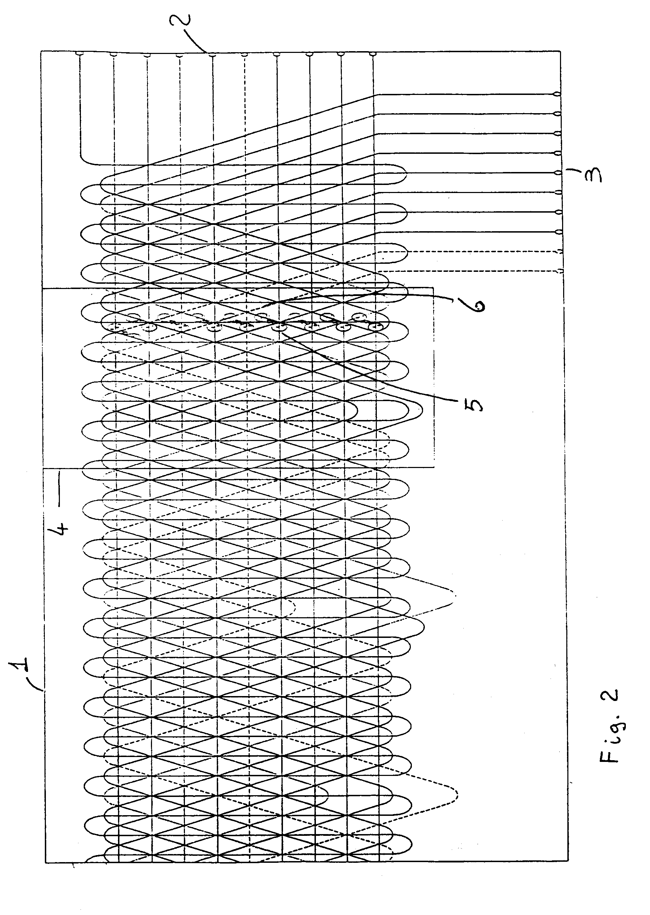

In Fig. 2, besides the parts described in connection with Fig. 1, a slider 4 is shown with receive sensors 5 and transmit sensors 6 located thereon. Each receive sensor 5 is suitably connected to the corresponding transmit sensor 6.

According to a preferred embodiment of the invention, the cable 1 is of a substantially flat design, but it can assume other configurations such as the helicoidal one.

The cable 1 consists of a first group 2 of conductors and a second group 3 of conductors suitably insulated each other and designed to have transmit and receive properties; in a preferred embodiment the groups of conductors 2, 3 consist in slotted coaxial cables.

The special arrangement of conductors 2 and 3 allows the creation of such a configuration as to establish a bijection between its configuration at determined sections of the cable and the respective distance of said sections from one end of the cable.

A cable 1 of this type, notwithstanding it appears complicated at first sight, is easily obtainable through small modifications in the ropemaking techniques well known to those skilled in the art.

In Fig. 2 there is represented the slider 4, movable along the guide and, if the cable 1 is incorporated into the guide, along the cable too.

Located on the slider 4 are the receive sensors 5 and the transmit sensors 6. These are formed, in a preferred embodiment, by pairs or antennas, but they are not necessarily detachable from the slider 4 because they can be realized, e.g., also through suitable patterns formed on the surface of the slider 4.

Each pair of receive sensors 5 and transmit sensors 6 is electrically and circuitally connected in a suitable manner well known to those skilled in the art.

The system is hence comprised of a cable 1 as described above, a device located at one end of the cable 1 and designed to feed adequately the first group 2 of conductors with digital signals having a suitable frequency, receive sensors 5 and transmit sensors 6 located on the slider 4 and capable of receiving and transmitting the digital signals, and a converter designed to receive the signals from the second group 3 of conductors and convert them into position of the slider 4, for instance with respect to one end of cable 1.

The converter can be placed at one end of the cable or at any point, in parallel therewith.

It is obvious that the positions of the feeding device and of the converter can be exchanged.

When a receive sensor 5 receives a signal from one of conductors 2 of the first group, the signal is sent to the corresponding transmit sensor 6 which, in turn, retransmits it to one of the conductors 3 of the second group.

At each position occupied by the slider 4, there is a number of signal transmissions between conductors 2 of the first group and conductors 3 of the second group, through sensors 5,6 located on the slider 4, the same as those allowed by the special arrangement of the conductor groups 2 and 3.

In this way, the sensing of the position of the slider 4 is traced back to the monitoring of the number and position of received signals.

The conversion of the received signals in function of the position of the slider is easily obtainable e.g. through the use of a conversion table.

Depending on the number of conductors 2 or 3 used, and on the special weaving between them, the number of possible combinations is determined.

On the basis of this number of combinations the maximum length of the cable 1 is determined and consequently the minimum increase in the position of slider 4 that can be detected.

In the example shown in Figs. 1 and 2, ten conductors for group 2 and ten for group 3 are used.

Each position along the cable is traceable back to the combination of nine binary digits.

The tength s-shaped conductor belonging to the first group 2 of conductors can be used, e.g., for the identification and sensing of several sliders 4 along the cable 1.

Therefore, through small contrivances a system of this type can be used for detecting several sliders 4 movable along the cable 1. One of them can be, as said, the use of additional conductors for the identification of the sliders.

Another parameter to be taken into account for the above computations is the operating frequency that can be any in the radio frequency range, but that anyway affects the involved dimensions to a large extent.

In a variant of embodiment (not shown) the number of conductors 2 of the first group to which the feeder is applied, can be reduced.

Only one receive sensor 5 is on the slider, positioned along a sole fed conductor. This sensor 5 will be connected, in a suitable manner, with a series of transmit sensors 6.

The remaining part of the system will be similar to the corresponding one of the embodiment shown in the figures.

In this way the number of conductors used is reduced, but a reduction in the number of possible positional combinations of conductor 3 will result accordingly.

Thus the invention fully achieved the above mentioned object.

In fact there is provided a simple system that does not need additional elements for sending detected signals to the user, but the guide itself incorporating the cable is used for this and it can be supplied in tranches of pre-established length.

There is provided a system for detecting the position of one or more sliders at the same time which, at parity of precision, results to be cheaper than the existing systems.

Moreover, in the use of this kind of cable for the remote detection of mobile vehicles equipments installed on board of the vehicles are no longer necessary. In fact the control of the position of the mobile vehicles can be carried out from one end of the cable, or at any point along it, through a sole control station for handling the remote-detected traffic.

## Claims

1. A system for detecting the position of sliders movable along a linear guideway characterized in that both the function of position indicator and the function of detected signal transmitter are performed through a unique means associated with said guideway.

2. A system according to claim 1, characterized by comprising
- a cable disposed along said guideway,
- means located at one end of said cable and capable of feeding successively a first set of n radiating conductors of said cable with digital signals of suitable frequency,
- an array of receiving antennas located on the slider and designed to pick up m signals radiated by said first set of conductors,
- an array of transmitting antennas located on the respective slider and respectively connected to said receiving antennas, said transmitting antennas being designed to retransmit said m signals to a second set of n pick-up conductors of said cable, and
- a converter designed to receive a variable number p of digital signals from said second set of n conductors and to convert them into the distance of the respective slider from said cable end.

3. A system according to claim 2, characterized in that said cable has such a configuration as to establish a bijection between its configuration at determined sections of its and the respective distances of said sections from one end of the cable.

4. A system according to claim 3, characterized in that said cable is composed of
- a first set of conductors laid in a substantially longitudinal direction with fixed geometry,
- a second set of conductors laid according to a variable geometry waveform along the longitudinal axis of the cable,
- said conductors being insulated each other and forming pairs of radiating-picking up elements whose number is variable with the distance from one end of the cable in such a way that it is possible to establish a bijection between said number of pairs and said distance according to a pre-established scan of the distance moved by the slider.

5. A system according to claim 2, characterized in that said converter is located at said one end of the cable.

6. A system according to claim 2, characterized in that said converter is connected in parallel with the cable.

7. Method of detecting the position of mobile objects, in particular sliders along a linear guideway, comprising the steps of:
a) electrically feeding with suitable signals a first stationary arrangement of n transmitting elements disposed along the guideway,
b) receiving m signals through a first mobile arrangement of receiving sensors, fixedly connected with each slider,
c) retransmitting said m signals through a second arrangement of transmitting sensors corresponding to said receiving sensors and fixedly connected to the slider, and
d) receiving a variable number p of signals through a second stationary arrangement of receiving elements disposed along the guideway and sending them to a converter, and
e) converting said p signals into the corresponding slider position which is a function of the relative geometry between said first and second stationary arrangements of transmitting and receiving elements.

8. Method according to claim 7, characterized in that said number (m) of received signals in said step b) is fixed and is equal to the number (n) of signals fed in said step a) and that the number (p) of signals received in said step d) is a function of the position of the slider along said linear guideway.

9. Method according to claim 7, characterized in that said number m of signals received in said step b) is variable in function of the position of said slider along said linear guideway and is equal to said number p of signals received in said step d).

10. Cable for detecting the position of objects moving parallelly thereto, in particular of sliders along linear guideways, characterized by having such a configuration as to establish a bijection between its configuration at determined sections of it and the respective distance of said sections from one end of the cable.

11. A cable according to claim 10, characterized by comprising:
- a first set of conductors laid in a substantially longitudinal direction with fixed geometry,
- a second set of conductors laid according to a variable geometry waveform along the longitudinal axis of the cable,
- said conductors being insulated each other and forming pairs of radiating-picking up elements whose number is variable with the distance from an end of the cable in such a way that it is possible to establish a bijection between said number of pairs and said distance according to a pre-established scan of the distance moved by the slider.

12. A cable according to claim 11, characterized in that said radiating/picking-up conductors are formed by slotted coaxial cables.

13. A cable according to claim 11, characterized in that it has an helicoidal configuration.

14. A cable according to claim 11, characterized in that it has the configuration of a flat stranded cable.
